# EUROPEAN PATENT APPLICATION

(11) **EP 4 787 548 A1**
(43) Date of publication of application: **05.08.2026**
(21) Application number: 24871041.0
(22) Date of filing: 27.09.2024
(51) Int. Cl.: H01M 10/63, H01M 10/6568, H01M 10/6556, H01M 10/613, H01M 10/615, H01M 50/317

(54) **BATTERY PACK AND ELECTRIC APPARATUS**

(30) Priority: 28.09.2023 CN 202322661868 U
(71) Applicant: SVOLT Energy Technology Co., Ltd., Changzhou, Jiangsu 213200 (CN)
(72) Inventor: XU, Haipeng, hangzhou, Jiangsu 213200 (CN)
(74) Representative: Michalski Hüttermann & Partner mbB
(86) International application number: PCT/CN2024/122014
(87) International publication number: WO 2025/067506

(57) **Abstract**

The present disclosure provides a battery pack and an electric device. The battery pack includes a lower housing, a battery unit comprising a plurality of battery cells arranged side by side, a cooling structure, and an exhaust structure. The cooling structure includes a bottom liquid cooling plate arranged on the lower housing, and a plurality of side liquid cooling plates arranged side by side on the bottom liquid cooling plate. An installation space for a single battery cell is defined between the bottom liquid cooling plate and two adjacent side liquid cooling plates, and explosion-proof valves of each battery cell face the bottom liquid cooling plate. The exhaust structure includes a bottom exhaust chamber formed between the bottom liquid cooling plate and the lower housing, and a side exhaust chamber formed at a side of the lower housing and configured to communicate the bottom exhaust chamber with the atmosphere. The bottom liquid cooling plate is provided with exhaust holes arranged in one-to-one correspondence with the explosion-proof valves, and the exhaust holes are in communication with the bottom exhaust chamber. The battery pack provided by the present disclosure can quickly heat or cool the internal temperature of the battery cells, thereby balancing the temperature of the entire battery cells, preventing high-temperature flue gas from accumulating in the battery pack, and improving the safety of the battery pack.

## Description

### CROSS-REFERENCE TO RELATED APPLICATION

The present disclosure claims priority to the Chinese patent application with the filing No. CN202322661868.3 filed with the Chinese Patent Office on September 28, 2023, and entitled "BATTERY PACK AND ELECTRIC DEVICE", which is incorporated herein by reference in entirety.

### TECHNICAL FIELD

The present disclosure relates to the technical field of new energy battery pack structures and thermal safety, and in particular, to a battery pack and an electric device having the battery pack.

### BACKGROUND ART

Soft-pack battery cells are packaged with an aluminum-plastic film, thereby having lower strength than prismatic battery cells. When a thermal runaway occurs, it is also more likely to spread to other cells. Existing power battery systems often use a liquid cooling plate to cool the battery cells, so as to reduce the risk of the temperature of a single battery cell being too high or too low during use.

However, in the prior art, a single-plate liquid cooling plate is arranged below or above the battery cell, resulting in a monotonous structural configuration, poor cooling and heating effects, and in particular, an inability to quickly adjust the temperature in the middle of the battery cell, thereby causing a large temperature difference between the middle and the outside of the battery cell. This cannot meet the heating and cooling requirements under extreme operating conditions, nor the cooling requirements under thermal runaway of the battery cell. Moreover, because most existing battery cells have their explosion-proof valves arranged at the side, the flue gas mixture discharged from the explosion-proof valves can only be exhausted through a single path. The flue gas mixture that cannot be exhausted in time tends to cause a sharp rise in pressure and temperature inside the battery pack, which can easily lead to explosion of the battery pack and affect passenger safety.

### SUMMARY

In view of the above, an objective of the present disclosure is to provide a battery pack that can quickly heat or cool the internal temperature of the battery cells, balance the temperature of the entire battery cells, provide an exhaust path for the pressure relief valves, avoid accumulation of high-temperature flue gas inside the battery pack, and improve the safety of the battery pack.

In a first aspect, the present disclosure provides a battery pack, including a lower housing, a battery unit comprising a plurality of battery cells arranged side by side, a cooling structure, and an exhaust structure, wherein
the cooling structure includes a bottom liquid cooling plate arranged on the lower housing, and a plurality of side liquid cooling plates arranged side by side on the bottom liquid cooling plate, wherein an installation space for a single battery cell is defined between the bottom liquid cooling plate and two adjacent side liquid cooling plates, and explosion-proof valves of each battery cell face the bottom liquid cooling plate; and
the exhaust structure includes a bottom exhaust chamber formed between the bottom liquid cooling plate and a bottom of the lower housing, and a side exhaust chamber formed at a side of the lower housing and configured to communicate the bottom exhaust chamber with the atmosphere, wherein the bottom liquid cooling plate is provided with exhaust holes arranged in one-to-one correspondence with the explosion-proof valves, and the exhaust holes are in communication with the bottom exhaust chamber.

Beneficial effects: by providing the bottom liquid cooling plate on the lower housing and arranging the side liquid cooling plates side by side on the bottom liquid cooling plate, with the side liquid cooling plates being arranged between two adjacent battery cells, the heat transfer area is increased, thereby enabling rapid heating or cooling of the internal temperature of the battery cells and balancing the temperature of the entire battery cells. Furthermore, by providing the bottom exhaust chamber between the bottom liquid cooling plate and the lower housing, and providing the side exhaust chamber that communicates the bottom exhaust chamber with the atmosphere, high-temperature flue gas is discharged from the bottom exhaust chamber into the side exhaust chamber and then into the atmosphere, thereby preventing accumulation of high-temperature flue gas inside the battery pack and improving the safety of the battery pack.

In an optional embodiment, the bottom liquid cooling plate is internally provided with a first liquid inlet channel and a first liquid outlet channel that are oppositely arranged, and a plurality of first communication channels arranged between the first liquid inlet channel and the first liquid outlet channel and configured to communicate the first liquid inlet channel and the first liquid outlet channel;
the first liquid inlet channel is configured to input a cooling medium into each of the first communication channels; and
the first liquid outlet channel is configured to output the cooling medium from each of the first communication channels.

Beneficial effects: the bottom liquid cooling plate is provided with the first liquid inlet channel and the first liquid outlet channel in communication, so that the cooling medium can circulate within the bottom liquid cooling plate, thereby improving the cooling effect of the bottom liquid cooling plate.

In an optional embodiment, the side liquid cooling plates are internally provided with a plurality of second communication channels arranged at intervals along a length direction of the side liquid cooling plates; and
a bottom end of each of the second communication channels is in communication with an adjacent one of the first communication channels.

Beneficial effects: by providing the second communication channels in the side liquid cooling plates, the cooling medium can flow along the length direction of the side liquid cooling plate, thereby improving the cooling effect. The second communication channels are in communication with the first communication channels, so that the cooling medium flows from the bottom liquid cooling plate to the side liquid cooling plate, thereby ensuring temperature balance between the bottom and the side of the battery cell and improving the safety of the battery cell.

In an optional embodiment, a plurality of first communication channels are arranged between two adjacent side liquid cooling plates, and one of the first communication channels is arranged at a bottom of the side liquid cooling plates.

The bottom end of each second communication channel in the liquid cooling plates is in communication with the first communication channels located at the bottom of the side liquid cooling plates.

Beneficial effects: each second communication channel is in communication with a first communication channel, so that the cooling medium located in the bottom liquid cooling plate can flow into the side liquid cooling plate through the plurality of second communication channels, thereby ensuring temperature balance between the bottom and the side of each battery cell and improving the safety of the battery cell.

In an optional embodiment, the bottom liquid cooling plate and the plurality of side liquid cooling plates are integrally formed; and/or
the lower housing is provided with the plurality of battery cells.

In an optional embodiment, a bottom of each of the battery cells is provided with two explosion-proof valves, and the exhaust holes are arranged in one-to-one correspondence with the explosion-proof valves.

Beneficial effects: by arranging the explosion-proof valves at the bottom of the battery cell in correspondence with the exhaust holes of the bottom liquid cooling plate, the high-temperature flue gas of the battery cell can be conveniently discharged from the exhaust holes into the bottom exhaust chamber, and then into the atmosphere through the side exhaust chamber.

In an optional embodiment, the lower housing includes an internally hollow frame, and a bottom guard plate arranged at a bottom of the frame and protruding downward; and
the frame is provided with an installation part located above the bottom guard plate, the installation part is configured to mount the bottom liquid cooling plate, and the bottom exhaust chamber is formed between the bottom guard plate and the bottom liquid cooling plate.

In an optional embodiment, side beams are respectively arranged around the frame, and installation parts are oppositely arranged at bottoms of two of the side beams; and
the side exhaust chamber is formed in each of the side beams, a communication cavity is arranged in an installation part, and the communication cavity is configured to communicate the bottom exhaust chamber with the side exhaust chambers.

Beneficial effects: by arranging side beams around the frame, forming the side exhaust chamber within the side beam, and communicating the bottom exhaust chamber with the side exhaust chamber through the communication cavity, more flue gas can be effectively discharged out of the battery pack, the pressure inside the battery pack during thermal runaway is reduced, and explosion of the battery pack is prevented.

In an optional embodiment, the installation part is internally provided with a plurality of first cavities arranged at intervals along a width direction of the installation part, and the side beams are internally provided with a plurality of second cavities arranged at intervals along a height direction of the side beams; and
the plurality of first cavities arranged in communication constitute the communication cavity, and the plurality of second cavities arranged in communication constitute the side exhaust chamber.

In a second aspect, the present disclosure further provides an electric device, in which the battery pack as described above is arranged.

Beneficial effects: by providing the battery pack as described above, the temperature balance of the battery cells inside the battery pack can be improved, damage to the battery cells caused by excessive local temperature can be avoided, and the battery pack can have a better pressure relief capability, thereby ensuring the safety of the electric device.

### BRIEF DESCRIPTION OF DRAWINGS

To more clearly illustrate the specific embodiments of the present disclosure or the technical solutions in the prior art, the drawings required for the description of the specific embodiments or the prior art will be briefly introduced below. Obviously, the drawings in the following description are some embodiments of the present disclosure. For a person of ordinary skill in the art, other drawings can be obtained from these drawings without inventive efforts.
FIG. 1 is a three-dimensional structural schematic diagram of a battery pack according to an embodiment of the present disclosure;
FIG. 2 is a three-dimensional structural schematic diagram of a cooling structure according to an embodiment of the present disclosure;
FIG. 3 is a schematic diagram showing connection between a cooling structure and battery cells according to an embodiment of the present disclosure;
FIG. 4 is a three-dimensional structural schematic diagram of a frame according to an embodiment of the present disclosure;
FIG. 5 is a schematic sectional view of the battery pack taken along the X direction at the middle of a battery cell according to an embodiment of the present disclosure;
FIG. 6 is a partial enlarged view of part I in FIG. 3;
FIG. 7 is a schematic diagram of a partial connection structure between a first communication channel and a second communication channel according to an embodiment of the present disclosure;
FIG. 8 is a simplified schematic diagram of a connection structure among a frame, battery cells, and a lower housing according to an embodiment of the present disclosure; and
FIG. 9 is a schematic sectional view of an installation part and a side beam according to an embodiment of the present disclosure.

### Description of reference numerals:

1 - lower housing; 2 - battery unit; 3 - cooling structure; 4 - exhaust structure;
101 - frame; 102 - bottom guard plate;
201 - battery cell;
301 - bottom liquid cooling plate; 302 - side liquid cooling plate;
401 - bottom exhaust chamber; 402 - side exhaust chamber;
1011 - installation part; 1012 - side beam; 1013 - first cavity; 1014 - second cavity; 1015 - vent opening; 1016 - vent hole;
3011 - first communication channel; 3012 - exhaust hole;
3021 - second communication channel; 3022 - third communication channel.

### DETAILED DESCRIPTION OF EMBODIMENTS

To make the objectives, technical solutions, and advantages of the embodiments of the present disclosure clearer, the technical solutions in the embodiments of the present disclosure will be described clearly and completely below with reference to the drawings in the embodiments of the present disclosure. Obviously, the described embodiments are some, but not all, of the embodiments of the present disclosure. Based on the embodiments in the present disclosure, all other embodiments obtained by a person of ordinary skill in the art without inventive efforts shall fall within the protection scope of the present disclosure.

The present disclosure will be described in detail below with reference to the drawings and embodiments.

This embodiment relates to a battery pack, which includes a lower housing 1, a battery unit 2 comprising a plurality of battery cells 201 arranged side by side, a cooling structure 3, and an exhaust structure 4. The cooling structure 3 includes a bottom liquid cooling plate 301 arranged on the lower housing 1, and a plurality of side liquid cooling plates 302 arranged side by side on the bottom liquid cooling plate 301. An installation space for a single battery cell 201 is defined between the bottom liquid cooling plate 301 and two adjacent side liquid cooling plates 302, and the explosion-proof valves of each battery cell 201 face the bottom liquid cooling plate 301.

Moreover, the exhaust structure 4 includes a bottom exhaust chamber 401 formed between the bottom liquid cooling plate 301 and the lower housing 1, and a side exhaust chamber 402 formed at a side of the lower housing 1 and configured to communicate the bottom exhaust chamber 401 with the atmosphere. The bottom liquid cooling plate 301 is provided with exhaust holes 3012 arranged in one-to-one correspondence with the explosion-proof valves, and the exhaust holes 3012 are in communication with the bottom exhaust chamber 401.

In the battery pack of this embodiment, by providing the bottom liquid cooling plate 301 on the lower housing 1 and arranging the side liquid cooling plates 302 side by side on the upper portion of the bottom liquid cooling plate 301, with the side liquid cooling plates 302 being arranged between two adjacent battery cells 201, the heat transfer area is increased, thereby enabling rapid heating or cooling of the internal temperature of the battery cells 201 and balancing the temperature of the entire battery cells 201. Furthermore, by providing the bottom exhaust chamber 401 between the bottom liquid cooling plate 301 and the lower housing 1, and providing the side exhaust chamber 402 that communicates the bottom exhaust chamber 401 with the atmosphere, high-temperature flue gas is discharged from the bottom exhaust chamber 401 into the side exhaust chamber 402 and then into the atmosphere, thereby preventing accumulation of high-temperature flue gas inside the battery pack and improving the safety of the battery pack.

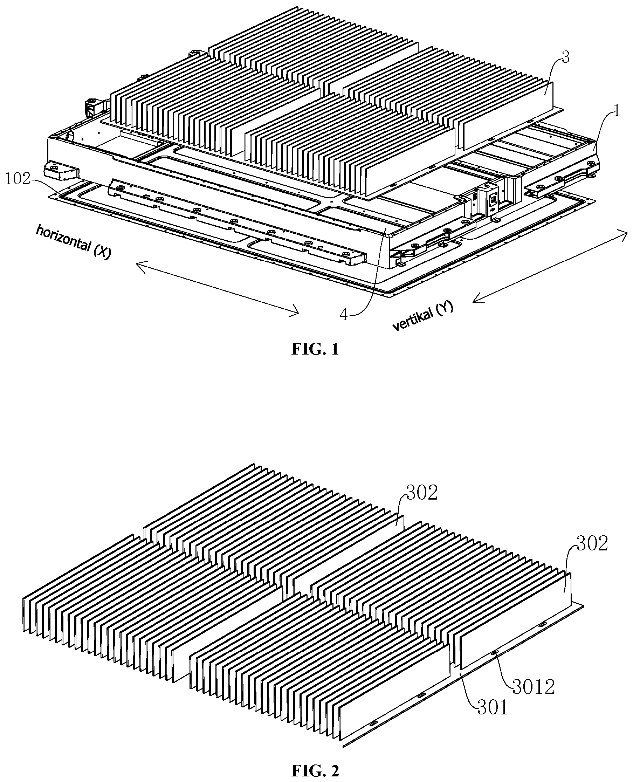

Based on the above overall concept, an exemplary structure of the battery pack of this embodiment, as shown in FIG. 1, mainly includes the lower housing 1 and the battery unit 2 arranged from bottom to top. The battery unit 2 consists of a plurality of battery cells 201 arranged in parallel in sequence, with a side liquid cooling plate 302 being disposed between every two battery cells 201, and the bottom of each of the battery cells 201 abuts against the bottom liquid cooling plate 301.

As shown in FIGS. 1 and 2, the cooling structure 3 of this embodiment consists of a bottom liquid cooling plate 301 and a plurality of side liquid cooling plates 302 that are arranged perpendicular to the bottom liquid cooling plate 301. The side liquid cooling plates 302 are fixed to the bottom liquid cooling plate 301 by welding or are integrally formed therewith. As shown in FIG. 1, the battery cell 201 of this embodiment is a short blade battery cell 201. To increase the capacity of the battery cells 201, as shown in FIG. 2, the battery cells 201 of this embodiment are arranged in four groups of integrated modules in a rectangular array on the bottom liquid cooling plate 301.

The battery cells 201 of each integrated module are arranged in a plurality of rows sequentially along the length direction X of the bottom liquid cooling plate 301. In this embodiment, the number of battery cells 201 is not limited and can be adjusted as needed, and the structural arrangement of the cooling structure 3 can be adaptively adjusted according to the number of battery cells 201.

Preferably, the bottom liquid cooling plate 301 of this embodiment is internally provided with a first liquid inlet channel and a first liquid outlet channel that are oppositely arranged, and a plurality of first communication channels 3011 arranged between the first liquid inlet channel and the first liquid outlet channel and configured to communicate the first liquid inlet channel and the first liquid outlet channel. The first liquid inlet channel is configured to input a cooling medium into each of the first communication channels 3011, and the first liquid outlet channel is configured to output the cooling medium from each of the first communication channels 3011.

As a specific implementation of this embodiment, the bottom liquid cooling plate 301 has a first liquid inlet channel and a first liquid outlet channel. The first liquid inlet channel is in communication with an outlet of an external cooling device or heating device, and the first liquid outlet channel is configured to communicate with an inlet of the external cooling device, thereby forming a circulating cooling channel or heating channel and improving the cooling effect of the bottom liquid cooling plate.

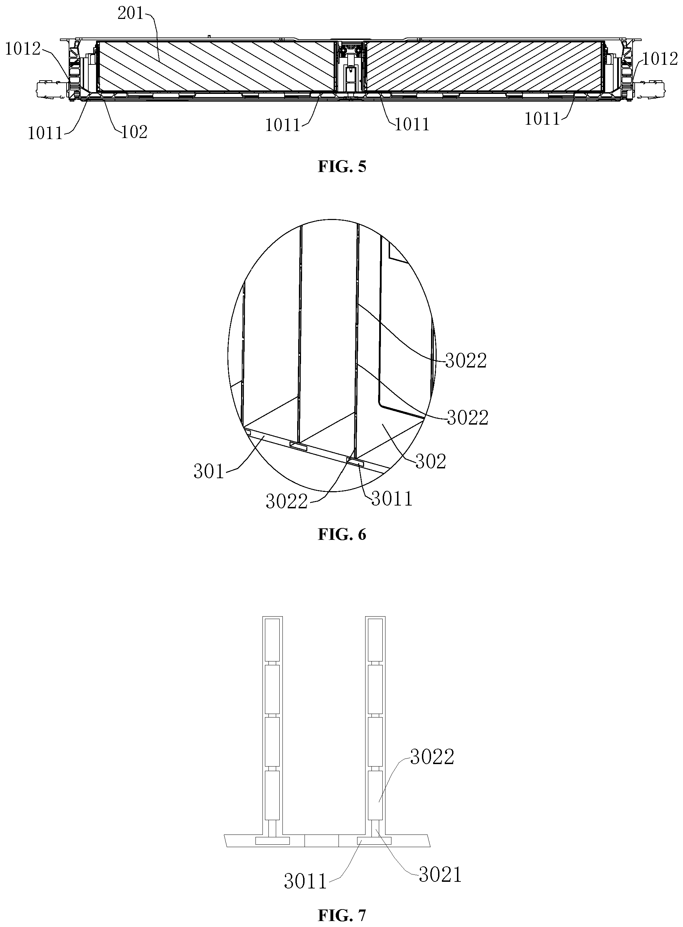

Preferably, based on the state shown in FIG. 6, a plurality of second communication channels 3021 are arranged in the side liquid cooling plate 302 at intervals along a length direction of the side liquid cooling plates 302, and the second communication channels 3021 extend along a height direction of the side liquid cooling plate 302. A bottom end of each second communication channel 3021 is in communication with an adjacent one of the first communication channels 3011.

In addition, it should be noted that as shown in FIGS. 2 and 6, the second communication channels 3021 are long holes arranged along the height direction of the side liquid cooling plate 302. Along the length direction of the side liquid cooling plate 302, third communication channels 3022 are further provided, and the third communication channels 3022 are vertically in communication with the second communication channels 3021. A plurality of the third communication channels 3022 are arranged at intervals along the height direction.

The first communication channels 3011 are in communication with the second communication channels 3021 and the third communication channels 3022, so that the channels between the bottom liquid cooling plate 301 and the side liquid cooling plates 302 are in communication, allowing the cooling medium to flow along the sides and the bottom of the battery cell 201, thereby increasing the heat transfer area and facilitating the temperature uniformity of the entire battery cell 201. Furthermore, because the side liquid cooling plate 302 is provided with the plurality of second communication channels 3021, the cooling medium can flow along the length direction of the side liquid cooling plate 302, thereby improving the cooling effect.

As a feasible embodiment, a plurality of first communication channels 3011 are arranged between two adjacent side liquid cooling plates 302, and one of the first communication channels 3011 is arranged at a bottom of the side liquid cooling plates 302. A bottom end of each second communication channel 3021 in the side liquid cooling plates 302 is in communication with the first communication channels 3011 located at the bottom of the side liquid cooling plate 302. In terms of specific structure, as shown in FIGS. 2 and 7, the first communication channels 3011 of this embodiment are arranged directly below the side liquid cooling plates 302 and at a middle position between two side liquid cooling plates 302. Such an arrangement further increases the heat transfer area of the bottom liquid cooling plate 301 and improves the bottom heat transfer effect.

To improve the exhaust function of the explosion-proof valves of the battery cells 201, a bottom of each of the battery cells 201 in this embodiment is provided with two explosion-proof valves, and the exhaust holes 3012 are arranged in one-to-one correspondence with the explosion-proof valves. In terms of specific structure, as shown in FIGS. 1 to 4, one side of the battery cell 201 facing the bottom liquid cooling plate 301 is provided with explosion-proof valves, and two explosion-proof valves are arranged in parallel on the side of each battery cell 201, thereby improving exhaust efficiency and quickly alleviating thermal runaway. Moreover, by arranging the explosion-proof valves at the bottom of the battery cell 201 in correspondence with the exhaust holes 3012 of the bottom liquid cooling plate 301, the high-temperature flue gas of the battery cell 201 can be conveniently discharged from the exhaust holes 3012 into the bottom exhaust chamber 401, and then into the atmosphere through the side exhaust chamber 402.

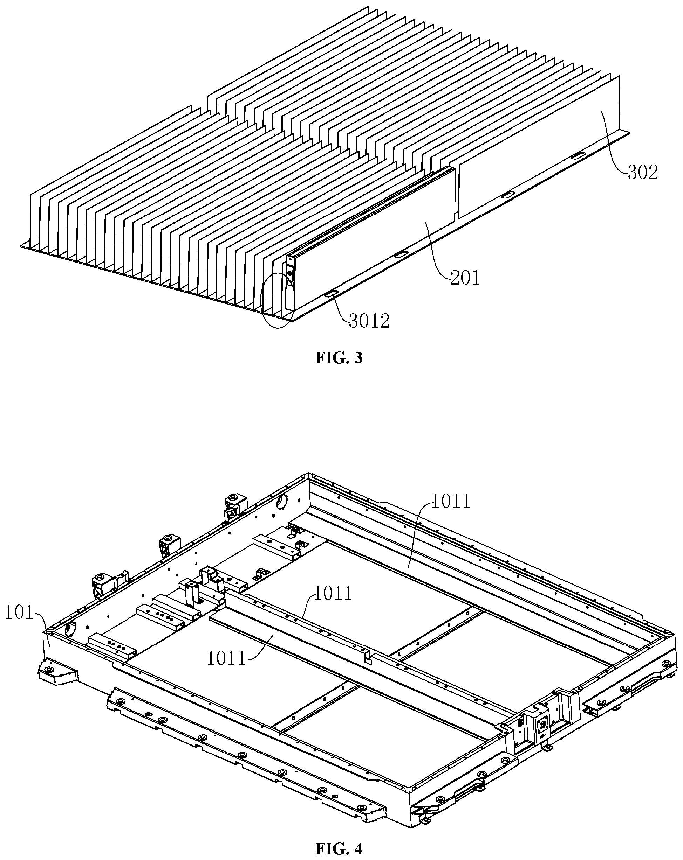

To facilitate the arrangement of the cooling structure 3, the lower housing 1 includes an internally hollow frame 101, and a bottom guard plate 102 arranged at a bottom of the frame 101 and protruding downward. The frame 101 is provided with an installation part 1011 located above the bottom guard plate 102. The installation part 1011 is configured to mount the bottom liquid cooling plate 301, and the bottom exhaust chamber 401 is formed between the bottom guard plate 102 and the bottom liquid cooling plate 301. Specifically, as shown in FIG. 4, the frame 101 forms a rectangular structure with a notch at the bottom thereof.

As also shown in FIGS. 4 and 5, the installation part 1011 extends from an inner cavity of the frame 101 toward a middle portion. The bottom of the bottom liquid cooling plate 301 is mounted on the installation part 1011. As described above, in this embodiment, there are four groups of integrated modules of battery cells 201, and a cross beam and a longitudinal beam are integrally formed to cross each other in the middle of the frame 101. The longitudinal beam extends along the X direction, and the bottom of the longitudinal beam is connected to the cross beam in a cross shape, with two installation parts 1011 being arranged on both sides of a lower end of the longitudinal beam. The cross beam and the longitudinal beam divide the bottom of the frame 101 into four notches.

Further, side beams 1012 are respectively arranged around the frame 101, and the installation parts 1011 are oppositely arranged at bottoms of two of the side beams 1012. The side exhaust chamber 402 is formed in each of the side beams 1012, a communication cavity is arranged in the installation part 1011, and the communication cavity is configured to communicate the bottom exhaust chamber 401 with the side exhaust chambers 402. In terms of specific structure, as shown in FIGS. 4 and 5, the side beam 1012 and the installation part 1011 form an L-shape to form a hollow cavity, which facilitates the installation of the cooling structure 3.

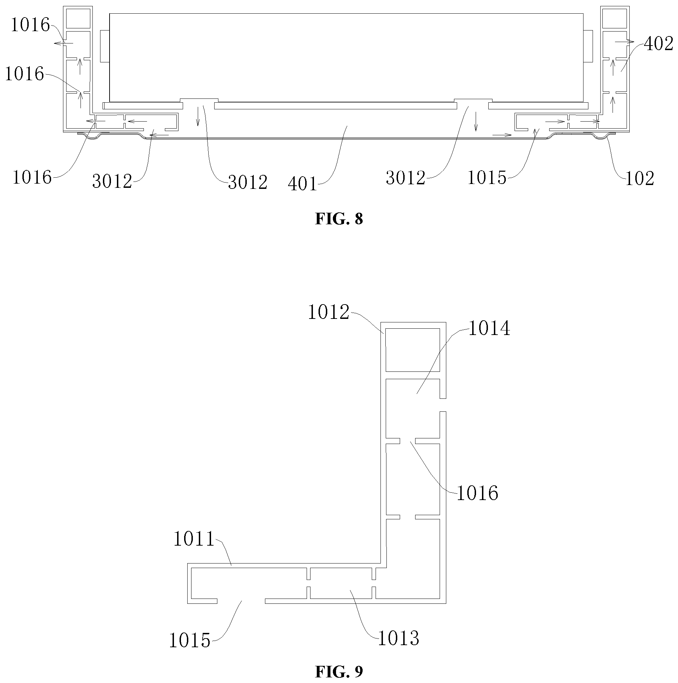

In addition, as shown in FIGS. 1 and 8, the bottom guard plate 102 of this embodiment is formed into a flat plate structure, and its shape matches the shape of the frame 101. Both sides of the bottom guard plate 102 are provided with upwardly protruding ribs, and a middle portion of the bottom guard plate 102 is recessed relative to the ribs. The cavity formed between the bottom liquid cooling plate 301 and the recessed portion serves as the bottom exhaust chamber 401. Moreover, the side exhaust chamber 402 is formed in each of the side beams 1012, and the bottom exhaust chamber 401 is in communication with the side exhaust chambers 402 through the communication cavity. This allows more flue gas to be effectively discharged out of the battery pack, which reduces the pressure inside the battery pack during thermal runaway, and prevents explosion of the battery pack.

Further, the installation part 1011 is internally provided with a plurality of first cavities 1013 arranged at intervals along a width direction of the installation part 1011, and the side beams 1012 are internally provided with a plurality of second cavities 1014 arranged at intervals along a height direction of the side beams 1012. The plurality of first cavities 1013 arranged in communication constitute the communication cavity, and the plurality of second cavities 1014 arranged in communication constitute the side exhaust chamber 402.

In terms of specific structure, as shown in FIGS. 8 and 9, the installation part 1011 is in communication with the side beam 1012 and integrally formed therewith, and an accommodating cavity is formed inside the two. The installation part 1011 is divided into two first cavities 1013 by a partition plate. The first cavity 1013 near the middle of the accommodating cavity has a vent opening 1015 at its bottom, and the partition plate between two adjacent first cavities 1013 is provided with a vent hole 1016 for high-temperature flue gas to pass through.

As also shown in FIG. 9, in this embodiment, there are four second cavities 1014 arranged along the height direction of the side beam 1012. The lowermost second cavity 1014 is located at the junction of the installation part 1011 and the side beam 1012. Two adjacent second cavities 1014 are separated by a partition plate, and the partition plate is also provided with a vent hole 1016. The side exhaust chamber 402 of this embodiment is provided with a plurality of communicated second cavities 1014. In addition, a side surface of one of the second cavities 1014 near the outside is further provided with a vent hole 1016 communicating with the atmosphere.

As indicated by the arrows in FIG. 8, high-temperature flue gas released from the explosion-proof valves of the battery cells 201 enters the bottom exhaust chamber 401 through the exhaust holes 3012, then passes through the vent openings 1015 provided in the first cavities 1013 to enter the installation part 1011, further enters the second cavities 1014, and then is discharged into the atmosphere through the vent holes 1016 that communicate with the atmosphere, thereby achieving the purpose of releasing high-temperature gas from the battery pack.

In the battery pack of this embodiment, by providing the bottom liquid cooling plate 301 and the side liquid cooling plates 302 above the lower housing 1, with the side liquid cooling plates 302 being arranged between two adjacent battery cells 201, the heat transfer area is increased, thereby enabling rapid heating or cooling of the internal temperature of the battery cells 201 and balancing the temperature of the entire battery cells 201. Furthermore, because the bottom exhaust chamber 401 is provided between the bottom liquid cooling plate 301 and the lower housing 1, and the side exhaust chamber 402 communicates the bottom exhaust chamber 401 with the atmosphere, high-temperature flue gas is discharged from the bottom exhaust chamber 401 into the side exhaust chamber 402 and then into the atmosphere, thereby preventing accumulation of high-temperature flue gas inside the battery pack and improving the safety of the battery pack.

This embodiment also relates to an electric device, in which the battery pack as described above is arranged.

According to the electric device of this embodiment, by providing the battery pack as described above, the temperature balance of the battery cells 201 inside the battery pack can be improved, damage to the battery cells 201 caused by excessive local temperature can be avoided, and the battery pack can have a better pressure relief capability, thereby ensuring the safety of the use of the electric device.

Although the embodiments of the present disclosure have been described with reference to the drawings, those skilled in the art can make various modifications and variations without departing from the spirit and scope of the present disclosure, and such modifications and variations all fall within the scope defined by the appended claims.

### INDUSTRIAL APPLICABILITY

According to the battery pack of the present disclosure, by providing the bottom liquid cooling plate on the lower housing and arranging the side liquid cooling plates side by side on the upper portion of the bottom liquid cooling plate, with the side liquid cooling plates being arranged between two adjacent battery cells, the heat transfer area is increased, thereby enabling rapid heating or cooling of the internal temperature of the battery cells and balancing the temperature of the entire battery cells. Furthermore, by providing the bottom exhaust chamber between the bottom liquid cooling plate and the lower housing, and providing the side exhaust chamber that communicates the bottom exhaust chamber with the atmosphere, high-temperature flue gas is discharged from the bottom exhaust chamber into the side exhaust chamber and then into the atmosphere, thereby preventing accumulation of high-temperature flue gas inside the battery pack and improving the safety of the battery pack.

## Claims

1. A battery pack, comprising:
a lower housing, a battery unit comprising a plurality of battery cells arranged side by side, a cooling structure, and an exhaust structure, wherein
the cooling structure comprises a bottom liquid cooling plate arranged on the lower housing, and a plurality of side liquid cooling plates arranged side by side on the bottom liquid cooling plate, wherein an installation space for a single battery cell is defined between the bottom liquid cooling plate and two adjacent side liquid cooling plates, and explosion-proof valves of each of the battery cells face the bottom liquid cooling plate; and
the exhaust structure comprises a bottom exhaust chamber formed between the bottom liquid cooling plate and a bottom of the lower housing, and a side exhaust chamber formed at a side of the lower housing and configured to communicate the bottom exhaust chamber with the atmosphere, wherein the bottom liquid cooling plate is provided with exhaust holes arranged in one-to-one correspondence with the explosion-proof valves, and the exhaust holes are in communication with the bottom exhaust chamber.

2. The battery pack according to claim 1, wherein
the bottom liquid cooling plate is internally provided with a first liquid inlet channel and a first liquid outlet channel that are oppositely arranged, and a plurality of first communication channels arranged between the first liquid inlet channel and the first liquid outlet channel and configured to communicate the first liquid inlet channel and the first liquid outlet channel;
the first liquid inlet channel is configured to input a cooling medium into each of the first communication channels; and
the first liquid outlet channel is configured to output the cooling medium from each of the first communication channels.

3. The battery pack according to claim 2, wherein
the side liquid cooling plates are internally provided with a plurality of second communication channels arranged at intervals along a length direction of the side liquid cooling plates; and
a bottom end of each of the second communication channels is in communication with an adjacent one of the first communication channels.

4. The battery pack according to claim 3, wherein
a plurality of first communication channels are arranged between two adjacent side liquid cooling plates, and one of the first communication channels is arranged at a bottom of the side liquid cooling plate; and
the bottom end of each of the second communication channels in the side liquid cooling plates is in communication with the first communication channels located at the bottom of the side liquid cooling plates.

5. The battery pack according to claim 1, wherein
the bottom liquid cooling plate and the plurality of side liquid cooling plates are integrally formed; and/or
the lower housing is provided with the plurality of battery cells.

6. The battery pack according to claim 1, wherein
a bottom of each of the battery cells is provided with two explosion-proof valves, and the exhaust holes are arranged in one-to-one correspondence with the explosion-proof valves.

7. The battery pack according to any one of claims 1 to 6, wherein
the lower housing comprises an internally hollow frame, and a bottom guard plate arranged at a bottom of the frame and protruding downward; and
the frame is provided with an installation part located above the bottom guard plate, the installation part is configured to mount the bottom liquid cooling plate, and the bottom exhaust chamber is formed between the bottom guard plate and the bottom liquid cooling plate.

8. The battery pack according to claim 7, wherein
side beams are respectively arranged around the frame, and installation parts are oppositely arranged at bottoms of two of the side beams; and
the side exhaust chamber is formed in each of the side beams, a communication cavity is arranged in an installation part, and the communication cavity is configured to communicate the bottom exhaust chamber with the side exhaust chambers.

9. The battery pack according to claim 8, wherein
the installation part is internally provided with a plurality of first cavities arranged at intervals along a width direction of the installation part, and the side beams are internally provided with a plurality of second cavities arranged at intervals along a height direction of the side beams; and
the plurality of first cavities arranged in communication constitute the communication cavity, and the plurality of second cavities arranged in communication constitute the side exhaust chamber.

10. An electric device, wherein
the electric device is provided with the battery pack according to any one of claims 1 to 9.
